(19) Europäisches Patentamt / European Patent Office / Office européen des brevets

(11) **EP 4 498 349 A1**

(12) **EUROPEAN PATENT APPLICATION**

(43) Date of publication:
29.01.2025 Bulletin 2025/05

(21) Application number: 23187762.2

(22) Date of filing: 26.07.2023

(51) International Patent Classification (IPC):
*G08G 5/00* (2025.01)

(52) Cooperative Patent Classification (CPC):
G08G 5/0026; G08G 5/0052; G08G 5/0069;
G08G 5/0082

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **TrackDeep OÜ**
**11415 Tallinn (EE)**

(72) Inventor: **Mõttus, Märten**
**Tallin (EE)**

(74) Representative: **Moosedog Oy**
**Vähäheikkiläntie 56C**
**20810 Turku (FI)**

(54) **SYSTEM AND METHOD FOR FINDING PROSPECTIVE LOCATIONS OF DRONE OPERATORS WITHIN AN AREA**

(57) Disclosed is a method for finding a location (x, y) of a drone operator (102) within an area (A), the method comprises: obtaining map information (104) of the area; detecting a first set of positions (x1, y1, z1) of a drone (108); forming a first set of probability mappings (114A, 114B) based on the respective positions of the first set of positions and the obtained map information, wherein each of the first probability mappings provides, respectively a first probability of the location of the drone operator; combining the first set of probability mappings together to obtain a combined probability mapping (122) of the location of the drone operator; and selecting as prospective location area (p11) of the drone operator, the location area in which values of the combined probability mappings are above predetermined value.

FIG. 1A

**(Cont. next page)**

100

108

(x2, y2, z2)

(0, Y)

(X, Y)

102

(x, y)

(0, 0)

(X, 0)

p10

p9

114B

p8

# FIG. 1B

100

114A

p5    p6

p4    p7

p2    p3

p1

p10

p9

p9    114B

p12    p13

122

p11

(0, Y)    (X, Y)

(x, y)

(0, 0)    (X, 0)

# FIG. 1C

## Description

TECHNICAL FIELD

The present disclosure relates to methods for finding locations of drone operators within area. Moreover, the present disclosure relates to systems for finding prospective locations of drone operators within area. Furthermore, the present disclosure relates to computer program products.

BACKGROUND

With the advent of digital technology, drones became more affordable, accessible, and capable. Small, lightweight drones equipped with advanced sensors, cameras, and flight control systems emerged, revolutionizing the consumer and commercial drone market. The drones are available for recreational use, aerial photography, videography, and various professional applications. Typically, the drone is operated by a drone operator who is responsible for controlling and managing the flight and operations of the drone. Notably, the drone operator operates drones within the line of sight, throughout its flight allowing direct observation of the drone's movements, monitoring its surroundings, and ensuring compliance with airspace regulations and safety protocols.

However, there are specific areas and situations where the use of drones is restricted or prohibited. These restricted areas include sensitive locations such as airports, military installations, government buildings, or other designated areas where the operation of drones can pose risks to public safety, security, or privacy. In restricted areas, drone operators are not allowed to fly the drones due to the potential hazards or concerns associated with these locations. Failure to comply with these restrictions can result in legal consequences, including fines or penalties.

When the drone is flying over the restricted area, it becomes crucial to locate the drone operator. The identification of the drone operator is essential because it enables the authorities to take appropriate action and mitigate potential risks or concerns associated with the presence of the drone. Locating the drone operator allows for a swift response in cases where the drone operation is unauthorized, unwanted, or potentially hostile. By identifying the operator's whereabouts, it becomes possible to take measures to stop the drone's operation and prevent any potential harm or disruption caused by its activities.

Conventionally, the programmable non-flight zones are designated where drone flight is restricted or prohibited. However, these zones can face challenges. Firstly, there is a risk of drones being hacked, potentially bypassing the restrictions and entering the restricted area. Secondly, there is the possibility that drone operators may not comply with the rules and intentionally fly in restricted areas.

Therefore, in light of the foregoing discussion, there exists a need to overcome the aforementioned drawbacks.

SUMMARY

The aim of the present disclosure is to provide a system and a method to determine the location of a drone operator. The aim of the present disclosure is achieved by a system and a method for finding a prospective location of a drone operator within an area as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

BRIEF DESCRIPTION OF THE DRAWINGS

FIGs. 1A, 1B and 1C are schematic illustrations for finding prospective locations of a drone operator within an area, in accordance with an embodiment of the present disclosure;

FIG. 2 is a schematic illustration of a situation when the drone is moving from a first position to a second position, in accordance with an embodiment of the present disclosure; and

FIG. 3 illustrates steps of a method for finding a location of a drone operator within an area, in accordance with an embodiment of the present disclosure.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for finding a location of a drone operator within an area, the method comprising:

- obtaining map information of the area;
- detecting a first set of positions of a drone;

- forming a first set of probability mappings based on the respective positions of the first set of positions and the obtained map information, wherein each of the first probability mappings provides, respectively a first probability of the location of the drone operator;

- combining the first set of probability mappings together to obtain a combined probability mapping of the location of the drone operator; and

- selecting as prospective location area of the drone operator, the location area in which values of the combined probability mappings are above predetermined value.

The first aspect provides combining the first set of probability mappings together to obtain a combined probability mapping of the location of the drone operator. The combined probability mapping is integrated or combined using appropriate methodologies. This integration process involves techniques such as statistical analysis, spatial analysis, or machine learning algorithms, depending on the nature of the data and the desired outcome. Beneficially, the combined probability mapping provides a comprehensive representation of the likelihood or probability of the drone operator's location based on the available information. Moreover, the combined probability mapping can be useful in various applications, such as search and rescue operations, surveillance, locating, or finding missing drone operator. One way to make combined probability mapping is to multiply probabilities of each respective sub areas together. This way we get probabilities for the sub areas of the area. Sub area can be for example grid of $1 \times 1$ meter, 10x10 meter, 20x20 meter or a like. Probability of said area can be average probability on said grid.

In a second aspect, the present disclosure provides a system for finding prospective locations of a drone operator within an area, the system comprising

- a geospatial data;
- a detection means to detect a first set of positions of the drone;
- a computing unit configured to

  - form a first set of probability mappings based on the respective positions of the first set of positions and the map information from the geospatial data, wherein each of the first probability mappings provides, respectively a first probability of a location of the drone operator;
  - combine the first set of probability mappings together to obtain a combined probability mapping of the location of the drone operator; and
  - select as prospective locations of the drone operator, the locations in which values of the combined probability mappings are above predetermined value.

Beneficially, the geospatial data provides a comprehensive understanding of the Earth's surface. The geospatial data rely on location-based information for planning, analysis, and decision-making processes. Moreover, the geospatial data and data received from the detection means is provided on the computing unit. Advantageously, the computing unit is configured to provide the processing power, control, and intelligence required for storing and analyzing the operation of drones and the management of geospatial data which contributes in selecting the prospective locations of the drone operator.

In a third aspect, the present disclosure provides a computer program product comprising a non-transitory machine-readable data storage medium having stored thereon program instructions that, when executed by a processor, cause the processor to execute steps of the first aspect.

Beneficially, the computer program product that can be executed on a portable device that users can carry. This portability allows for convenient access to detect the location of the drone operator anytime and anywhere, without the need for additional specialized hardware or equipment. Also, the computer program product often features an intuitive and user-friendly user interface that is optimized for touchscreens. This user interface enhances the user experience and makes it easier for individuals to interact with the user interface.

Throughout the present disclosure the term "*location*" refers to a specific point in physical space to describe a specific position. Herein the location of the drone operator is determined. The location of the drone operator lies within the area. The area is the geographic space or region in which the drone operator is intended to be present. The drone operator refers to an individual or entity that is responsible for the operation, control, and management of the drone. The drone operator is in charge of piloting the drone and is responsible for complying with regulations and guidelines set by aviation authorities. The regulations may comprise aspects such as drone registration, pilot certification, flight restrictions, privacy considerations, and safety protocols. In particular, the drone operator is responsible to operate the drone in lawful manner, ensuring the safety of people, property, and other airspace users. Optionally, the location may be in geodetic (latitude/longitude) or civic address format. Indeed the location can be longitude-latitude pair. The location can also include height from sea level i.e. location can be two dimensional (2D i.e. (x,y) or three dimensional (3D i.e. (x, y, z))

The drone (namely unmanned aerial vehicle) is an aerial vehicle that operates without an onboard pilot. Typically, the drones are controlled remotely. Optionally, the drones are programmed to fly autonomously using pre-defined instructions. Optionally, the drone has different sizes, shapes, and configurations. Optionally, the drones may include but not limited to a camera, global position system (GPS) receiver, accelerometer and gyroscope. The drone is controlled using a handheld remote controller or mobile application by the drone operator. Beneficially, the drone is used for aerial surveying, mapping, surveillance, search and rescue operations, delivery services, agricultural monitoring, infrastructure inspection, and so forth. The ability to fly in hard-to-reach or hazardous areas makes drones particularly valuable in various industries, providing cost-effective and efficient solutions for data collection and analysis.

The method comprises obtaining map information of the area. The term "*map information*" refers to data that represents details on the map. The map information includes details of the earth's surface, such as landforms, bodies of water, vegetation, and topographic details. Moreover, the map information includes colours, contour lines, and shading on the map. Furthermore, the map information also provides terrain, elevation changes, and natural characteristics of the area. In addition, the map information may include roads, buildings, landmarks, infrastructure, boundaries, and other man-made structures. Optionally, the map information may include thematic data such as population density, transportation networks, land use patterns, geological information, weather patterns, points of interest, and the like. The method utilized map information of the area to identify, understand, and analyse the physical features of the area.

The method comprises detecting the first set of positions of the drone. The term "*first set of position*" refers to the position information of the drone during the first instance (or first period of time starting from t0 to t1 such as for period of 1, 2, 5, 10, 30, 60 minutes or 1, 2, 5 etc hours longer) of detection of the drone. The first set of positions is the information of the drone positions in time series. As an example of the time series, a drone position at a first instance of time is at a first position, a second instance of time at a second position, a third instance of time in a third position etc, wherein the positions are different from each other's. For example, if the drone position is detected at two instances of time a first probability mapping and a second probability mapping can be formed (i.e. a first set of probability mappings is comprises in this example the first probability mapping and the second probability mapping).

Optionally, the first set of positions may include but is not limited to a coordinate, a postal code, an address, a region, an area, a locality.

Optionally, detecting of the first set of positions is based on at least one of following detecting means: visual detection, detection of radio communication, detection of sound. In this regard, the visual detection refers to the process of identifying or spotting the drone using visual sensors. The visual detection involves perceiving and recognizing visual cues, patterns, shapes, colours, or movements to determine the presence or characteristics of the drone. In an embodiment, the imaging device are arranged to detect the first set of positions of the drone. In particular, the imaging device comprises image sensors that may be used to capture the one or more images of the drone. Optionally, the imaging device may capture a video of the drone. Herein, the one or more images may be frames of the video captured by image sensor of the imaging device.

The term "*detection of radio communication*" refers to the process of identifying or detecting the presence of the drone using radio signals. The detection of radio communication involves capturing and analysing electromagnetic waves within the radio frequency spectrum to determine the existence of the drone. The term "*detection of sound*" refers to the process of detecting the drone by using acoustic vibrations or auditory signals. The detection of sound involves capturing, processing, and analysing sound waves to determine the existence of the drone. A technical effect of visual detection, detection of radio communication, and detection of sound is that it involves perceiving, capturing, and analysing different types of information to detect the drone.

In some embodiment forming of the probability mapping is function of used detection means. If the detections is for example based on visual detection the probability or weight of said probability map is higher than if the detections are based on audio only. This is due to accuracy differences of the detection method. This allows to use multiple different detection methods in comparable manner.

Moreover, the method comprises forming the first set of probability mappings based on the respective positions of the first set of positions and the obtained map information. The term "*first set of probability mapping*" refers to the probability of locating the location of the drone operator within the area. The first set of probability mappings involves analysing and assessing the available data such as the first set of positions and the obtained map information to estimate the presence of the drone operator. Moreover, each of the first probability mappings provides, respectively the first probability of the location of the drone operator.

Furthermore, the method comprises combining the first set of probability mappings together to obtain the combined probability mapping of the location of the drone operator. The term "*combined probability mapping*" refers to a technique that combines the first set of probability mappings into a single probability mapping. The first set of probability mappings are combined together for the location of the drone operator within the area. Based on the probability the first set of probability mappings are formed and further combined. Optionally, various techniques can be utilised, such as averaging, weighted sum, advanced statistical algorithms and the like for combining the first set of probability mappings together to obtain the combined probability. The combined probability mapping provides the probability of the location of the drone operator.

Optionally or additionally,

- the obtained map information of the area is used for forming a second set of probability mappings based on geographical and topographical information of the area;

- updating the combined probability mapping by combining the second set of probability mappings to the combined probability mapping.

In this regard, the term "*second set of probability mapping*" refers to another set of probability mapping to find the location of the drone operator. The second set of probability includes the map information such as geographical and topographical information of the area. The second set of probability mappings is integrated with the existing combined probability mapping to create the updated combined probability mapping. The geographical and topographical information of the area includes elevation, land cover, terrain features, hydrology, and so forth. The second set of probability mappings involves analysing the geographical and topographical information of the area to estimate the probability of the location of the drone operator within different areas of the map. Moreover, updating the combined probability the second set of probability mappings to the combined probability mapping. The updated combined probability is the probability of the location of the drone operator, incorporated from the second set of probability mappings. A technical effect of updating the combined probability mapping by combining the second set of probability mappings to the combined probability mapping is that it allows in creating the assumption for decision-making to find the location of the drone operator.

Furthermore, the method comprises selecting as the prospective location area of the drone operator, the location area in which values of the combined probability mappings are above the predetermined value. The term "*prospective location area*" refers to an area for a potential location of the drone operator. The term "*predetermined value*" refers to a threshold or cutoff value that is established in advance. Typically, the predetermined value acts as a criterion for selecting the prospective location area. The combined probability mappings and the predetermined value involves identifying and isolating the areas where the probability values exceed the threshold. These areas are considered as the prospective location area where the drone operator is likely to be located. In particular, the prospective location area is the region or geographic area where the probability values are above the predetermined value. Example of such values could be to determine location of the drone operator with confidence of at least 80%, 85%, 90%, 95% or 99,99% for example.

Optionally or additionally,

- detecting a possible means of transportation of the drone operator;
- determining from the map information a vehicle access probability mapping to determine where the possible means of transportation can access; and
- updating the combined probability mapping by combining the vehicle access probability mapping to the combined probability mapping.

In this regard, the method involves identifying potential modes of transportation that the drone operator may be using. The method involves gathering information, analysing patterns, or conducting investigations to determine the mode of transportation used by the drone operator. The term "*vehicle access probability mapping*" refers to using the map information to create a probability map that indicates vehicle access to different areas. The vehicle access probability mapping includes road networks, terrain conditions, and other features that may influence the feasibility and accessibility of vehicles in the locations. The combined probability mapping is updated by combining the vehicle access probability mapping to the combined probability mapping to estimate the location of the drone operator. Suitably, by integrating the vehicle access probability map into the combined probability map, the analysis takes into consideration the areas where the drone operator may have been able to travel using the vehicle. A technical effect of detecting the possible means of transportation and determining the vehicle access probability is that it helps in updating the combined probability mapping that ensure for decision-making to identify the drone operator.

Optionally,

- the set of positions is obtained by detecting a first position at a first moment of time;
- determining a flight trajectory of the drone; and
- using the flight trajectory to determine the second position of the drone at a second moment of time.

In this regard, the method comprises obtaining the set of positions. In particular, the first position is detected at the first moment of time. Typically, the first position refers to identifying and determining the initial location of the drone. The first moment of time refers to the particular point in time at which the initial location of the drone is identified. Moreover, the flight trajectory of the drone is determined. The flight trajectory entails in analyzing speed, direction, altitude, and other parameters of the drone to determine the path followed during flight. The flight trajectory provides valuable information about the movement of drone and expected route. Furthermore, the flight trajectory is utilized to determine the second position of the drone at the second moment of time.

By utilizing the flight trajectory and the elapsed time between the first and second moment of time, the method allows to estimate and calculate the second position of the drone. This allows for tracking the drone's position and movement over time. A technical effect of the determining flight trajectory is that it allows for effective monitoring and analysis of the movement of the drone to ensure the accuracy of the obtained positions. Further technical effect is that, there is no need to detect position of the drone all the time, to obtain a probability mapping. Flight trajectory information provides drone position without direct detection.

Optionally,

- a previously obtained combined probability mappings are used to update the combined probability mapping.

In this regard, the information from the obtained combined probability mappings is used to update combined probability mapping to refine and enhance the accuracy. The "*previously obtained combined probability mapping*" refers to probability mapping that has been generated and derived from previous data. The previously obtained combined probability mapping represent the estimated probability of the position of the drone. To update the combined probability mapping, the information gained from the previously obtained combined probability mappings are incorporated into the combined probability mapping. A technical effect of using previously obtained combined probability mappings to update the combined probability mapping involves integrating information from previous probability maps to refine and enhance the accuracy of the current estimation. This iterative approach allows for a more comprehensive and informed assessment associated with determining the location of the drone operator.

Optionally,

- using simulated set of positions to obtain a simulated probability mapping; and
- updating the combined probability mapping by combining the simulated probability mapping to the combined probability mapping.

The term "*simulated set of position*" process of generating a set of positions through simulation techniques. Optionally, the set of positions are created based on various factors such the flight trajectories, the map information and the like. It will be appreciated that by simulating the movement and position of the drone over time the simulated set of positions is obtained. Once the simulated set of positions is generated, the simulated probability mapping is derived. The simulated probability mapping represents the estimated probabilities of the presence or occurrence of the drone at different locations based on the simulated set of position.

Moreover, the updating the combined probability mapping by combining the simulated probability mapping to the combined probability mapping. The said updating enables to refine and enhance the accuracy of the combined probability mapping by incorporating the insights gained from the simulated probability mapping. By incorporating the simulated probability mapping into the combined probability map, a more comprehensive and informed estimation of the probabilities related to the location of the drone and movement is achieved. A technical effect of the xx is that is helps in generating simulated set of positions of the drone, and integrating the combined probability map. This iterative method enhances the accuracy and reliability of the combined probability mapping.

Optionally, any of the preceding probability mappings are formed using machine learning. The term "*machine learning*" as used herein refers to a subset of artificial intelligence (AI) in which algorithms are trained using probability mappings. For example, the training dataset may be historical data stored in a memory to predict outcomes and draw inferences from patterns of the probability mappings.

The present disclosure also relates to the system as described above. Various embodiments and variants disclosed above, with respect to the aforementioned method, apply mutatis mutandis to the system.

The term "*geospatial data*" refers to information that is associated with specific geographic locations on the Earth's surface. The geospatial data represents data that has a spatial or geographic component, enabling it to be linked to specific coordinates or areas in a two-dimensional or three-dimensional space. The geospatial data includes data such as maps, satellite imagery, aerial photographs, global positioning system (GPS) coordinates, geographic features (e.g., rivers, mountains, roads), land use and land cover information, boundaries, population density, environmental parameters, and much more. Typically, the geospatial data is collected through various methods and technologies, including satellite and aerial sensors, ground surveys, remote sensing techniques, and crowd-sourced data.

Moreover, the geospatial data is stored, managed, and analysed using Geographic Information Systems (GIS) and other spatial data management tools and software. The geospatial data is utilized in creating maps, conducting spatial analysis, modelling and simulating scenarios, identifying patterns and trends, monitoring changes over time, assessing environmental impacts, optimizing resource allocation, and supporting location-based services and navigation to determine the location of the drone which further analysed to determine the location of the drone operator.

The term "*computing unit*" refers to an electronic device associated with (or used by) a user, that is capable of enabling the user to perform specific tasks associated with the aforementioned method and system. Furthermore, the computing unit is intended to be broadly interpreted to include any electronic device that may be used for voice and/or data communication over a wireless communication network. Examples of computing unit include, but are not limited to, cellular phones, personal digital assistants (PDAs), handheld devices, wireless modems, laptop computers, personal computers, etc. Additionally, the computing device includes a display, a camera, a memory, a processor, a communication interface. Moreover, the computing device is configured to host the user interface thereon to support and/or enable the operation of the system.

Optionally, the system further comprises a user interface to provide probability information on the prospective locations of the drone operator. The term "*user interface*" refers to an application program or a computer program designed for performing a specific task. Herein, the user interface is configured to to provide probability information on prospective locations of the drone operator. Moreover, user interface may be an open source, feature-rich, and includes various tools, such as simulation, rendering, motion tracking, and so on. For example, the user interface provides statistical information of probability of the location of the drone operators. By utilizing the said probability information, the location, route of the drone operator can be determined. The user interface may display the probability information in a visual format, such as maps with overlays or charts with numerical values.

Optionally, the user interface is a heat map. The term "*heat map*" refers to a graphical representation that uses colour variations to display data density or intensity over a specific area or set of points. The heat map provides a visual representation of data patterns, allowing users to identify the distribution and significance of the information presented therein. Moreover, the user interface uses colour gradients or variations to represent different levels or values of the data being displayed. For example, the user interface displays the heat map to represent prospective locations of the drone operator. Optionally, the intensity of the colours reflects the relative prospective locations of the drone operator at different locations, enabling users to quickly identify location of the drone operator. A technical effect of the heat map is that it allows user to use the heat map on the user interface to provide an intuitive and visually appealing representation of the prospective locations of the drone operator.

Optionally, the detection means is selected from: radar, camera, Lidar, audio sensor, visual observations, triangulation, radio communication to/from the drone, satellite image. In this regard, the radar refers to the detection means that uses radio waves to determine motion and velocity of the drone by figuring out change in a position, a trajectory, an angle thereof. The camera refers to a device used to capture and record visual images or photographs of the drone. Typically, the drone consists of an optical system that focuses light onto a light-sensitive surface, such as a film or an image sensor, to produce a permanent or digital image. The lidar is a remote sensing technology that uses laser beams to measure distances and create detailed three-dimensional maps of the drone and environment. Notably, the lidar is similar to radar but uses laser light instead of radio waves. The audio sensor is a device that detects and captures sound waves or audio signals in its surrounding environment to detect the drone. The audio sensor converts the acoustic energy of sound into electrical signals for further processing or analysis. The triangulation is a geometric technique that used to determine the position, distance, or angle of the drone in space by measuring the angles or distances from multiple known points of reference. The triangulation involves forming triangles using the reference points and using the principles of trigonometry to determine the position. The satellite image refers to a visual representation of the Earth's surface captured by a satellite orbiting in space obtained through remote sensing technology. The satellite images provide a unique perspective of our planet, enabling us to view vast areas of land, oceans, and atmosphere from a global or regional scale thus helps in determining the location of the drone.

Optionally, the geospatial data is in a cloud server. The term "*cloud server*" refers to a powerful physical or virtual infrastructure that has been virtualized, to perform application- and information-processing storage and enable accessing of the stored information by users remotely over a network. The cloud server includes suitable logic, circuitry, interfaces, and/or code that is configured to store, process and/or receive information from the real-time location, the detection means. It will be appreciated that the cloud server may be both a single server and/or a plurality of servers operating in a parallel or distributed architecture to operatively couple with the disclosed cloud-based system or similar systems. Examples of the cloud server include, but is not limited to, a storage server, a web server, an application server, or a combination thereof. Moreover, the cloud server allows the collection of geospatial data and storing, managing, and accessing from a remote location. A technical effect of utilizing the cloud server is that is allows centralized storage, scalability, accessibility, and enhanced data security.

Optionally, the geospatial data is in portable device. The term "*portable device*" refers to a compact and mobile electronic device that is designed to be easily carried and transported. It is typically lightweight, small in size, designed to provide functionality and convenience while being portable. Moreover, the portable device is configured to host the user interface thereon to enable the operation of the system. The portable device may include but not limited to smartphone, tablet, or handheld GPS receiver, that contains and stores the geospatial data. The portable device is equipped with capabilities to access, display, analyse, and interact with the geospatial data directly thereon.

By having geospatial data in the portable device, allow the users to have immediate access to map information, location, navigation tools, or other geospatial applications while on the move. Thus, allowing real-time decision-making, exploration, or analysis of spatial information to find prospective locations of the drone operator. Moreover, storing geospatial data in the portable device provides convenience and mobility, allowing users to have access to geospatial data. A technical effect of the geospatial data in the portable device is that it allows user to access stored geospatial data from the portable device providing flexibility, real-time access of the data.

The present disclosure also relates to the computer program product as described above. Various embodiments and variants disclosed above, with respect to the aforementioned method, apply mutatis mutandis to the computer program product.

Optionally, the computer program product is implemented as an algorithm, embedded in a software stored in the non-transitory machine-readable data storage medium. The non-transitory machine-readable data storage medium may include, but is not limited to, an electronic storage device, a magnetic storage device, an optical storage device, an electromagnetic storage device, a semiconductor storage device, or any suitable combination of the foregoing. Examples of implementation of the computer-readable medium include, but are not limited to, Electrically Erasable Programmable Read-Only Memory (EEPROM), Random Access Memory (R.A.M), Read Only Memory (ROM), Hard Disk Drive (HDD), Flash memory, a Secure Digital (SD) card, Solid-State Drive (SSD), a computer readable storage medium, and/or CPU cache memory.

Furthermore a synergistic technical effect of detecting a first set of positions of the drone on the area, for which the pare a map information is obtained, followed by forming a first set of probability mappings related to the said positions, and combining those probability mappings is that it provides a fast, accurate and effective (uses little computing power) way of finding prospective locations areas where the drone operator is. Finding the drone operator is important for example to ensure that drone operator stops the operation of the drone. This is beneficial for security and safety reasons as discussed, but also for reason of possible radio interference caused by radio traffic between drone and remote controller used by the drone operator.

EXPERIMENTAL PART

A flight trajectory of the drone is observed as it is operated over an area A. (in practice by observing a flight trajectory a set of positions of the drone is detected at different moments of time). The detected first set of positions corresponding the flight trajectory is then used to calculate a probability p of likely location (x, y) of a drone operator in respect to each position (x, y, z) of the drone during the flight. As an example, we can denote a probability distribution function p(x, y) in which value $p = p_a = 1$ is given on areas which can have a definite line of sight between the drone operator and the drone and $p = p_b = 0$ in areas in which drone operator cannot see the drone (such as behind building). Furthermore we can denote a probability $p = p_c = 0.5$ for those areas which it is fifty-fifty that drone can be seen (such as sparse forest area).

Probability of is determined / calculated over entire area A, wherein:

$$A = \{(x,y) \mid 0 \le x \le X, 0 \le y \le Y\}$$

for new observation (observations 1, 2, 3, ... N) of the drone from a location different from previous locations. The said observations can be known as events.

Event 1 is first time the drone is observed (say at x1, y1, z1),
Event 2 is second time (x2, y2, z2),
Event N is observation number N.
The probability for Event 1 is ($p_1$) with a probability distribution function $P_1(x, y)$
The probability for Event 2 is ($p_2$) with the probability distribution function $p_2(x, y)$.

The combined probability of Event 1 and Event 2 occurring simultaneously is given by:
$P(x, y) = p_1(x, y) \cdot p_2(x, y)$, where $P(x, y)$ represents the combined probability of both events happening at a point $(x, y)$

Generalizing for N Events we have N different events, each with its own probability distribution function: $p_i(x, y)$, wherein i represents the event type.

The combined probability of all N events occurring simultaneously is given by:

$$P(x, y) = \prod_{i=1}^{N} p_i(x, y)$$

The combined probability of all N events is used to find sub areas where the drone operator is likely to be. This is done by formulating Sub-Areas Exceeding Probability Limit ($P_{limit}$).

The sub-areas within the area where the combined probability exceeds a given limit $P_{limit}$ using the probability function $P(x,y)$.

The set of sub-areas is denoted as $A_{sub}$,
$A_{sub} = \{(x,y) \mid P(x,y) > P_{limit}, 0 \le x \le X, 0 \le y \le Y\}$, where $A_{sub}$ represents the set of sub-areas within the overall area where the combined probability exceeds the limit $P_{limit}$.

By iterating through the points in the area and evaluating the condition,

$P(x, y) > P_{limit}$ we can identify those sub-areas wherein the drone operator is most likely to be.

Furthermore, by adding a second event type such as terrain. For the said terrain the set probability distribution on which areas operator would be most likely to be. As an example, if part of the area is swamp then for terrain event type probability that the drone operator would be there is lower than in solid ground. An additional third event type could be the availability of roads. The probability of the drone operator to be on the road or close to the road could be set higher than in other areas.

It has been found out that above way of using probability distributions in a stacked manner has resulted on finding prospective locations of a drone operator within an area in surprisingly accurate manner. Indeed we have been able to detect locations with probability of up to 80% accuracy in difficult environment (lots of obstacles) and with probability of up to 90% accuracy in easy environment (small amount of obstacles) and in moderate environment (few obstacle) with a probability of 95 %. It has been counter intuitive to see that if the environment is "moderate" probability to finding prospective locations is highest.

DETAILED DESCRIPTION OF THE DRAWINGS

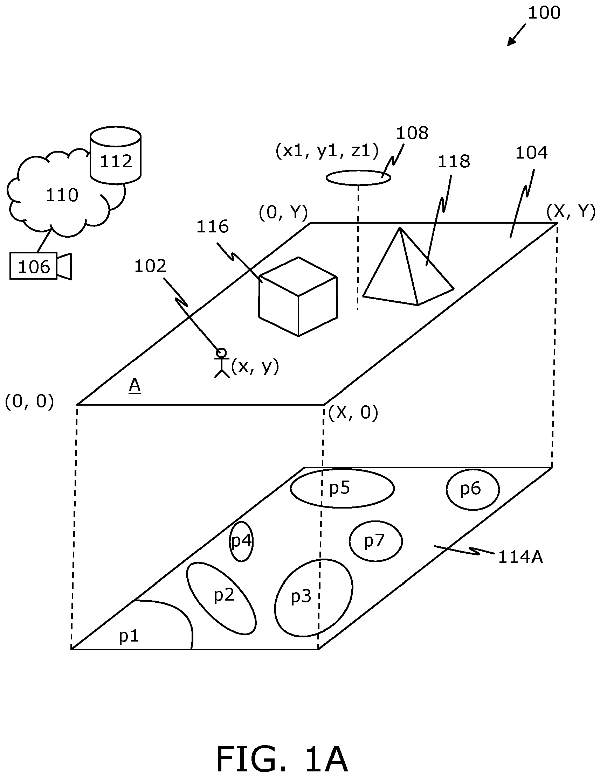

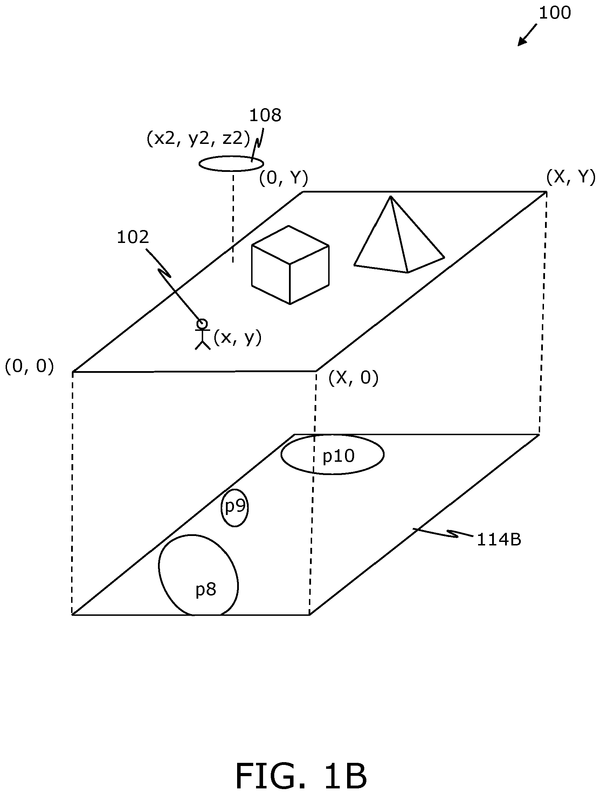

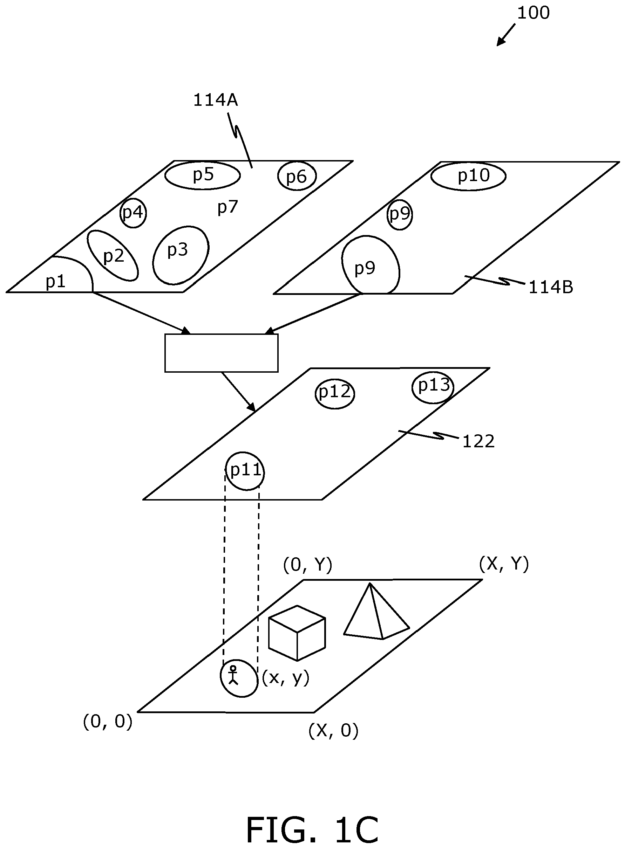

Referring to FIGs. 1A, 1B and 1C, are schematic illustrations of a system **100** for finding prospective locations (x, y) of a drone operator **102** within an area A, in accordance with an embodiment of the present disclosure. As shown, the area A is represented as a rectangular area having size depicted by (X, Y) and vertices of the rectangular area are depicted as (0, 0), (X, 0), (X, Y) and (0, Y). The area A is represented with a map information **104.** The map information **104** comprises information such as height contours, objects and their heights, terrain formations and the like.

As shown in FIG. 1A, the system **100** comprises a detection means (such as a camera) **106** to detect a first position (x1, y1, z1) of a drone **108**. The detection means **106** is configured to provide the detection related information (such as image) or position of the drone **108** over a communication network **110** to a computing unit **112** for processing. The information related to the first position (x1, y1, z1) and the map information **104** is used to form a first probability mapping **114A.** The first probability mapping **114A** provides information for finding the drone operator **102** within the area **A.** As shown, the first probability mapping **114A** having probability such as **p1, p2, p4, p3, p5, p6, p7,** wherein each different probability depicts the possible location of the drone operator **102** in the area **A.** Assuming that operation of the drone **108** requires a line of sight (from operator to drone) those areas which are not masked by any of the objects or mountains or forest have higher probability for the location of the drone operator **102** than those areas which are masked by some objects (such as **116, 118**).

Referring to FIG. 1B, as shown the drone **108** has moved from the first position (x1, y1, z1) to a second position (x2, y2, z2). The drone operator **102** is assumed to be in the same position. The drone **108** position is detected and the second position (x2, y2, z2) is used to form a second probability mapping **114B.** The second probability mapping **114B** having probability such as **p8, p9, p10** are areas with certain probability that the drone operator **102** is in the said areas.

In above the first position and the second position together form a first set of positions. In general and in practice number of positions in the first set of positions can be arbitrary number such as 1, 2, 3, 4, 5, 10, 20, 50, 100, 1000 etc. Furthermore the formed first probability mapping corresponds to the first position of the drone, and the formed second probability mapping corresponds to the second position of the drone. Together the first probability mapping and the second probability mapping are referred as a first set of probability mappings. In general number of probability mappings equals number of respective detected positions.

Referring to FIG. 1C, as shown combining the first probability mapping **114A** (formed when the drone was in the first position (x1, y1, z1)) and the second probability mapping **114B** (formed when the drone was in the second position (x2, y2, z2)) to obtain a combined probability mapping **122.** The combined probability mapping **122** having probability such as **p11, p12** and **p13** depicting possible areas of the drone operator **102.** As shown, the probability area **p11** is selected as the probability of finding the drone operator 102 in said area is highest.

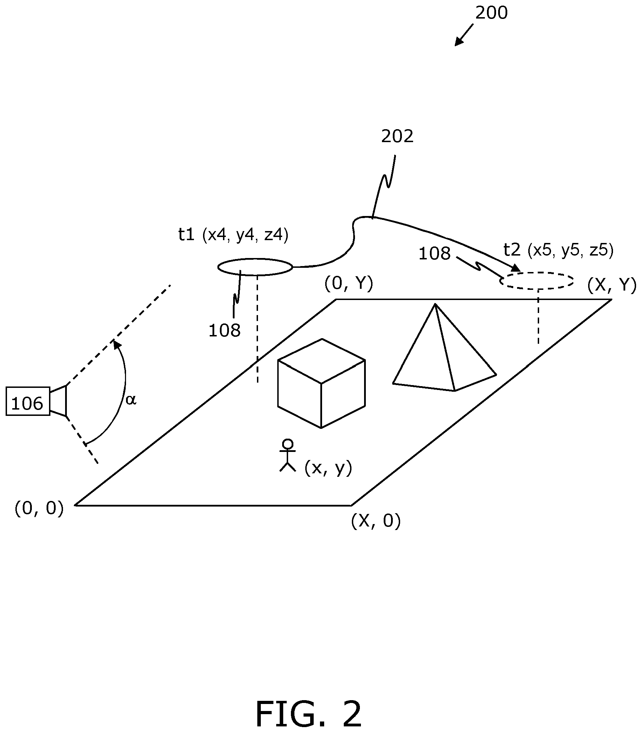

Referring to FIG. 2 is a schematic illustration of a situation when the drone **108** is moving from a first position to a second position. As shown, the drone **108** is detected at the first position (x4, y4, z4) at a first moment of time **t1** using the detecting means **106** having a viewing angle **a.** A flight trajectory **202** is determined. Based on the information of the position of the drone at the first moment of time **t1** and the flight trajectory 202 the position of the drone at a second moment of time **t2** can be calculated by following the flight trajectory **202.** The drone **108** moves from the first position (x4, y4, z4) to the second position (x5, y5, z5) at the second moment of time **t2.** The second position (x5, y5, z5) of the drone **108** is illustration of the estimated location of the drone **108** following the flight trajectory **202.** Beneficially, the said estimation helps in detecting the drone **108** if the detecting means **106** is not able to see thru obstacles.

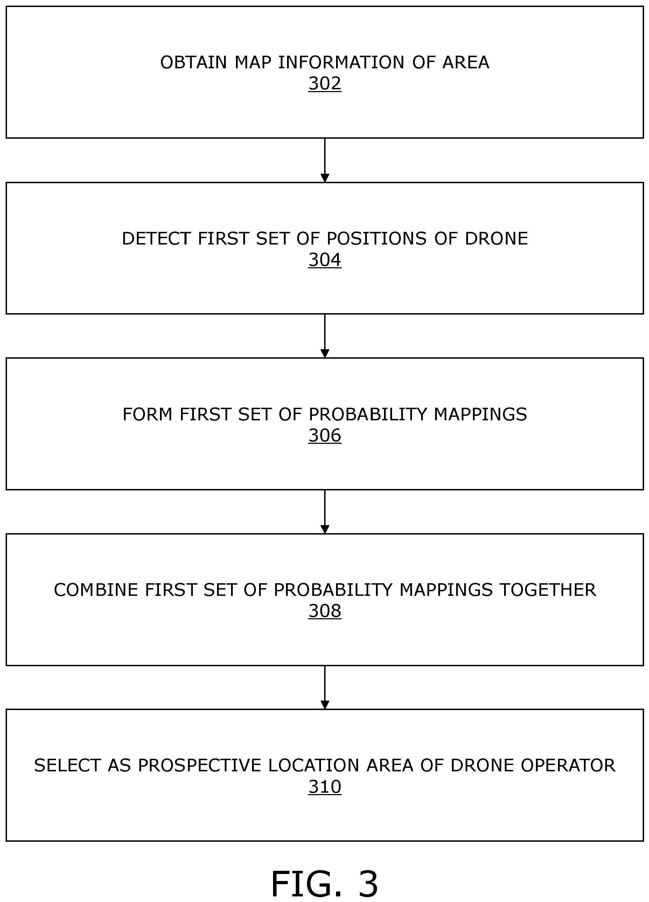

Referring to FIG. 3, there is shown steps of a method for finding a location of a drone operator within an area, in accordance with an embodiment of the present disclosure. At step **302,** a map information of the area is obtained. At step **304,** a first set of positions of a drone is detected. At step **306,** a first set of probability mappings is formed based on the respective positions of the first set of positions and the obtained map information, wherein each of the first probability mappings provides, respectively a first probability of the location of the drone operator. At step **308,** the first set of probability mappings is combined together to obtain a combined probability mapping of the location of the drone operator. At step **310,** a prospective location area of the drone operator is selected, the location area in which values of the combined probability mappings are above predetermined value. Technical effect of this is that we can use selected areas as prospective areas to find the drone operator.

The steps **302, 304, 306, 308** and **310** are only illustrative and other alternatives can also be provided where one or more steps are added, one or more steps are removed, or one or more steps are provided in a different sequence without departing from the scope of the claims herein.

## Claims

1. A method for finding a location (x, y) of a drone operator (102) within an area (A), the method comprising:

    - obtaining map information (104) of the area;
    - detecting a first set of positions (x1, y1, z1) of a drone (108);
    - forming a first set of probability mappings (114A, 114B) based on the respective positions of the first set of positions and the obtained map information, wherein each of the first probability mappings provides, respectively a first probability of the location of the drone operator;
    - combining the first set of probability mappings together to obtain a combined probability mapping (122) of the location of the drone operator; and
    - selecting as prospective location area (p11) of the drone operator, the location area in which values of the combined probability mappings are above predetermined value.

2. A method according to claim 1, wherein

    - the obtained map information (104) of the area (A) is used for forming a second set of probability mappings based on geographical and topographical information of the area;
    - updating the combined probability mapping (122) by combining the second set of probability mappings to the combined probability mapping.

3. A method according to any of the preceding claims, wherein

    - detecting a possible means of transportation of the drone operator (102);
    - determining from the map information (104) a vehicle access probability mapping to determine where the possible means of transportation can access; and
    - updating the combined probability mapping (122) by combining the vehicle access probability mapping to the combined probability mapping.

4. A method according to any of the preceding claims, wherein detecting of the set of positions is based on at least one of following detecting means (106): visual detection, detection of radio communication, detection of sound.

5. A method according to any of the preceding claims, wherein

    - the set of positions is obtained by detecting a first position (x4, y4, z4) at a first moment of time (t1);
    - determining a flight trajectory (202) of the drone (108); and
    - using the flight trajectory to determine the second position (x5, y5, z5) of the drone at a second moment of time (t2).

6. A method according to any of the preceding claims, wherein

    - a previously obtained combined probability mappings (122) are used to update the combined probability mapping.

7. A method according to any of the preceding claims, wherein

    - using simulated set of positions to obtain a simulated probability mapping; and
    - updating the combined probability mapping (122) by combining the simulated probability mapping to the combined probability mapping.

8. A method according to any of the preceding claims, wherein any of the preceding probability mappings are formed using machine learning.

9. A system (100) for finding prospective locations (p11) of a drone operator (102) within an area (A), the system comprising

    - a geospatial data;
    - a detection means (106) to detect a first set of positions (x1, y1, z1) of a drone (108);
    - a computing unit (112) configured to

        - form a first set of probability mappings (114A, 114B) based on the respective positions of the first set of positions and a map information (104) from the geospatial data, wherein each of the first probability mappings provides, respectively a first probability of a location of the drone operator;
        - combine the first set of probability mappings together to obtain a combined probability mapping of the location of the drone operator; and
        - select as prospective locations of the drone operator, the locations in which values of the combined probability mappings are above predetermined value.

10. A system (100) according to claim 9 where in the system further comprises a user interface to provide probability information on the prospective locations (p11) of the drone operator (102).

**11.** A system (100) according to claim 10, wherein the user interface is a heat map.

**12.** A system (100) according to any of claims 9 to 11, wherein the detection means (106) is selected from: radar, camera, Lidar, audio sensor, visual observations, triangulation, radio communication to/from the drone, satellite image.

**13.** A system (100) according to any of claims 9 to 12, wherein the geospatial data is in a cloud server.

**14.** A system (100) according to any of claims 9 to 13, wherein the geospatial data is in portable device.

**15.** A computer program product comprising a non-transitory machine-readable data storage medium having stored thereon program instructions that, when executed by a processor, cause the processor to execute steps of a method of any of claims 1-8.

FIG. 1A

FIG. 1B

FIG. 1C

FIG. 2

OBTAIN MAP INFORMATION OF AREA
302

DETECT FIRST SET OF POSITIONS OF DRONE
304

FORM FIRST SET OF PROBABILITY MAPPINGS
306

COMBINE FIRST SET OF PROBABILITY MAPPINGS TOGETHER
308

SELECT AS PROSPECTIVE LOCATION AREA OF DRONE OPERATOR
310

# FIG. 3

Europäisches
Patentamt

European
Patent Office

Office européen
des brevets

# EUROPEAN SEARCH REPORT

Application Number

EP 23 18 7762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/162489 A1 (BAR-NAHUM GUY [US] ET AL) 21 May 2020 (2020-05-21)<br>* the whole document *<br>* paragraphs [0018], [0023] *<br>----- | 1-15 | INV.<br>G08G5/00 |
| A | US 2023/111932 A1 (NIELSEN SIMON SAITO HAAGEN [US] ET AL)<br>13 April 2023 (2023-04-13)<br>* the whole document *<br>* paragraph [0057] *<br>----- | 1-15 | |
| A | US 2020/334961 A1 (KAINDL ROBERT [US])<br>22 October 2020 (2020-10-22)<br>* the whole document *<br>* paragraph [0079] *<br>----- | 1-15 | |

**TECHNICAL FIELDS SEARCHED (IPC)**

G08G

The present search report has been drawn up for all claims

| Place of search | Date of completion of the search | Examiner |
|---|---|---|
| The Hague | 11 January 2024 | Berland, Joachim |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 18 7762

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | | Publication date | Patent family member(s) | | Publication date |
|---|---|---|---|---|---|
| US 2020162489 | A1 | 21-05-2020 | US | 2020162489 A1 | 21-05-2020 |
| | | | WO | 2020102640 A1 | 22-05-2020 |
| US 2023111932 | A1 | 13-04-2023 | US | 11531357 B1 | 20-12-2022 |
| | | | US | 2023111932 A1 | 13-04-2023 |
| US 2020334961 | A1 | 22-10-2020 | CA | 3086908 A1 | 11-07-2019 |
| | | | EP | 3737584 A1 | 18-11-2020 |
| | | | US | 2020334961 A1 | 22-10-2020 |
| | | | US | 2022406151 A1 | 22-12-2022 |
| | | | WO | 2019136463 A1 | 11-07-2019 |

EPO FORM P0459

For more details about this annex : see Official Journal of the European Patent Office, No. 12/82